# EUROPÄISCHE PATENTSCHRIFT

(11) **EP 1 579 969 B1**
(45) Veröffentlichungstag und Bekanntmachung des Hinweises auf die Patenterteilung: **06.06.2007**
(21) Anmeldenummer: 05101953.7
(22) Anmeldetag: 14.03.2005
(51) Int. Cl.: B28D 1/04, B23D 47/02

(54) **Werkzeugvorrichtung, insbesondere Säge**
Tool mechanism, in particular saw
Dispositif d'outillage, notamment scie

(30) Priorität: 25.03.2004 DE 102004015075
(43) Veröffentlichungstag der Anmeldung: 28.09.2005
(73) Patentinhaber: HILTI Aktiengesellschaft, 9494 Schaan (LI)
(72) Erfinder: Schittl, Josef, 6712 Thüringen (AT)
(74) Vertreter: Wildi, Roland

(56) Entgegenhaltungen:
- DE-A- 4 241 046
- DE-A1- 3 347 251
- US-A1- 2003 131 839

## Beschreibung

Die vorliegende Erfindung betrifft eine Werkzeugvorrichtung, insbesondere ein Sägegerät, der im Oberbegriff von Patentanspruch 1 genannten Art.

Derartige Werkzeugvorrichtungen, wie schienengeführte Säge-, Schlitz- oder Bohrgeräte, weisen eine Antriebsanordnung auf, die sowohl dem Bewegen der Werkzeugvorrichtung entlang einer Führungsschiene als auch dem Verstellen eines das Werkzeug, wie z. B. ein Sägewerkzeug, tragenden Schwenkarms dient.

Aus der DE 42 41 046 C2 ist eine Werkzeugvorrichtung in Form eines schienengeführten Sägegerätes bzw. einer Wandsäge bekannt. Diese weist eine Antriebseinheit für das Sägewerkzeug mit einem Motor und eine Antriebsanordnung mit zwei weiteren Motoren auf. Ein Motor der Antriebsanordnung dient der Verschiebung eines die Wandsäge tragenden Führungsschlittens entlang einer Führungsschiene. Ein zweiter Motor der Antriebsanordnung dient dem Verstellen eines Schwenkarms an dem ein Sägewerkzeug angeordnet ist, so dass unterschiedliche Schnitttiefen möglich sind.

Von Nachteil hierbei ist, dass eine Antriebsanordnung mit zwei Motoren sehr aufwändig und teuer in der Herstellung ist.

Die Aufgabe der vorliegenden Erfindung liegt darin, eine Werkzeugvorrichtung der vorgenannten Art zu entwickeln, die die genannten Nachteile vermeidet.

Diese Aufgabe wird erfindungsgemäss durch die in Anspruch 1 genannten Massnahmen erreicht. Demnach weist die Antriebsanordnung einen einzelnen Motor auf, der abtriebsseitig mit dem ersten und dem zweiten Antriebsstrang gekoppelt ist. Ferner ist eine Schalteinrichtung vorgesehen, über die die Antriebsstränge selektiv aktivierbar sind. Durch die Kombination eines einzelnen Motors mit einer Schalteinrichtung zum in Funktion setzen wenigstens eines Antriebsstranges kann der bisher übliche zweite Motor eingespart und die Konstruktion deutlich vereinfacht werden. Weiterhin wird das Gewicht der Werkzeugvorrichtung reduziert.

Vorteilhaft weist die Antriebsanordnung eine Getriebeeinrichtung auf, die eingangsseitig mit dem Motor verbunden ist und die an einem ersten Getriebeabtrieb mit dem ersten Antriebsstrang gekoppelt ist und die an einem zweiten Getriebeabtrieb mit dem zweiten Antriebsstrang gekoppelt ist. Hierdurch können auf technisch einfache Weise beide Antriebsstränge von dem einzigen Motor bedient werden.

Günstig ist es ferner, wenn die Getriebeeinrichtung als Planetengetriebe ausgebildet ist, welches eingangsseitig mit Planetenrädern den Abtrieb des Motors kämmt, und bei dem der erste Getriebeabtrieb einen Planetenradträger umfasst, an dem die Planetenräder gelagert sind und der mit dem ersten Antriebsstrang gekoppelt ist, und bei dem der zweite Getriebeabtrieb ein Hohlrad umfasst, das eingangsseitig die Planetenräder kämmt und dass abtriebsseitig mit dem zweiten Antriebsstrang gekoppelt ist. Durch diese Massnahme kann in einfacher Weise eine Vereinzelung der Antriebsstränge erfolgen. Ferner ist das Planetengetriebe kompakt und ermöglicht eine geringere Baugrösse der Werkzeugvorrichtung.

Von Vorteil ist es ferner, wenn die Schalteinrichtung wenigstens eine Blockiereinrichtung für den ersten oder zweiten Antriebsstrang aufweist, wobei die Blockiereinrichtung zwischen einer den Antriebsstrang blockierenden Stellung und einer den Antriebsstrang freigebenden Stellung schaltbar ist. Durch diese Massnahme kann ein Antriebsstrang deaktiviert werden, ohne den anderen Antriebsstrang zu beeinflussen. Die Blockiereinrichtung kann dabei z. B. rein mechanisch oder elektromechanisch arbeiten.

Für den Bediener ist es komfortabel, wenn die Blockiereinrichtung elektromagnetisch arbeitet. Die Blockiereinrichtung ist dadurch elektronisch schaltbar, z. B. über Schalt- oder Bedienelemente an der Werkzeugvorrichtung oder an einer Fernbedienung für diese.

Vorteilhaft weist die Schalteinrichtung jeweils eine Blockiereinrichtung für jeden Antriebsstrang auf. Durch diese Massnahme kann jeder Antriebsstrang einzeln zu- oder abgeschaltet werden.

Günstigerweise ist die Blockiereinrichtung als Magnetkupplung ausgebildet. Derartige Magnetkupplungen weisen ein bestimmtes, maximal erreichbares Blockiermoment auf, wodurch ein gewisser Überlastschutz nach Art einer Rutschkupplung gewährleistet wird.

Weitere Vorteile und Massnahmen der Erfindung ergeben sich aus den Unteransprüchen, der nachfolgenden Beschreibung und den Zeichnungen. In den Zeichnungen ist die Erfindung in einem Ausführungsbeispiel dargestellt.
Es zeigen:
- Fig.1: eine Werkzeugvorrichtung in perspektivischer Ansicht mit angedeutetem Sägewerkzeug,
- Fig. 2: eine Schnittansicht durch einen Bereich der Antriebsanordnung der Werkzeugvorrichtung aus Fig. 1.

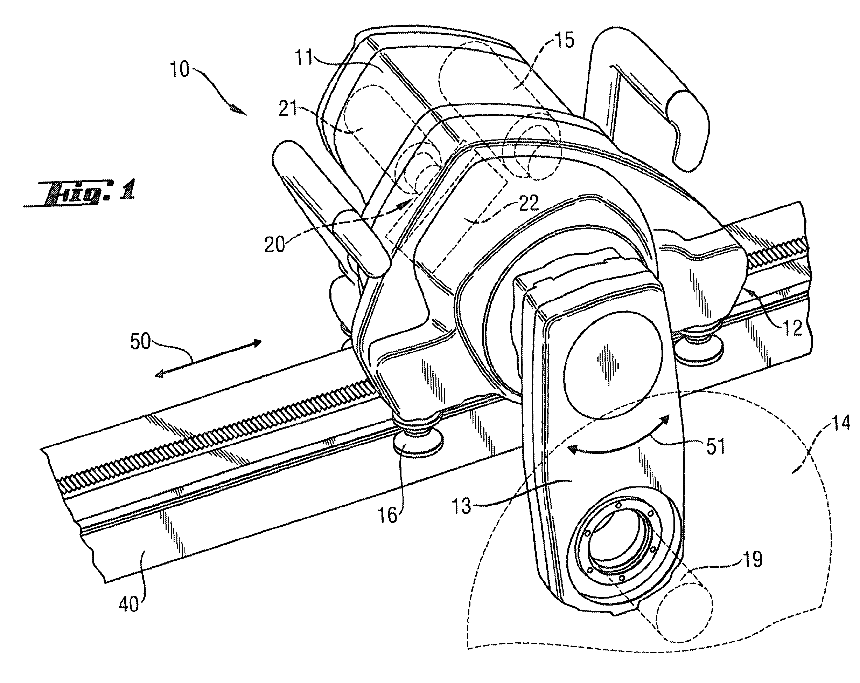

Die in Fig. 1 als schienengeführtes Sägegerät ausgebildete Werkzeugvorrichtung 10 weist einen Führungsschlitten 12 mit Führungsrollen 16 zur Führung an einer Führungsschiene 40 auf. Die Werkzeugvorrichtung 10 weist ferner ein Gehäuse 11 auf, in dem eine Antriebseinheit 15 für ein als Kreissägeblatt ausgebildetes Werkzeug 14 und eine insgesamt mit 20 bezeichnete Antriebsanordnung angeordnet ist. Die einen Motor 21 und eine insgesamt mit 22 bezeichnete Getriebeanordnung beinhaltende Antriebsanordnung 20 dient dabei sowohl dem Bewegen der Werkzeugvorrichtung 10 an der Führungsschiene 40 in den Richtungen des Doppelpfeils 50 als auch dem Verstellen eines Schwenkarms 13 in den Richtungen des Doppelpfeils 51. An dem Schwenkarm 13 ist dabei das Werkzeug 14 drehbar über eine Welle 19 angeordnet.

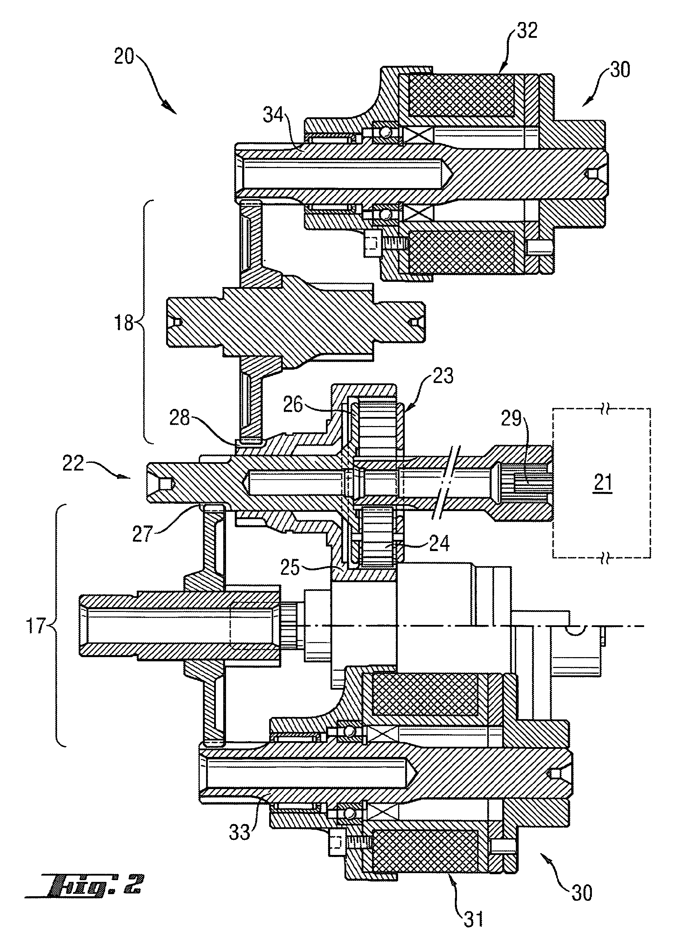

Die Antriebsanordnung 20 wird nachfolgend unter Bezugnahme auf Fig. 2 genauer beschrieben. Ein Abtrieb 29 in Form eines Motorritzels des Motors 21, der z. B. als Elektromotor, Hubkolbenmotor o. ä. ausgebildet ist, ist mit der Getriebeeinrichtung 22 gekoppelt. Die Getriebeeinrichtung 22 weist dazu ein Planetengetriebe 23 auf, welches Planetenräder 24 aufweist, die an einem Planetenradträger 26 angeordnet sind. Die Planetenräder 24 kämmen dabei den Abtrieb 29 des Motors 21. Das Planetengetriebe 23 weist ferner ein Hohlrad 25 auf, das eingangsseitig die Planetenräder 24 kämmt. Das Hohlrad 25 ist dabei relativ zum Planetenradträger 26 drehbar gelagert. Der Planetenradträger 26 weist einen ersten Getriebeabtrieb 27 auf, welcher einen ersten Antriebsstrang 17 kämmt, der hier nicht vollständig wiedergegeben ist und der für das Bewegen der Werkzeugvorrichtung 10 auf der Führungsschiene 40 verantwortlich ist. Das Hohlrad 25 weist einen zweiten Getriebeabtrieb 28 auf, welcher einen zweiten Antriebsstrang 18 kämmt, der hier nicht vollständig wiedergegeben ist und der für das Verstellen des Schwenkarms 13 verantwortlich ist.

Eine insgesamt mit 30 bezeichnete Schalteinrichtung weist zwei Blockiereinrichtungen 31, 32 auf, die als Magnetkupplungen ausgebildet sind und die jeweils mit einer Welle 33, 34 zusammenwirken. Die Schalteinrichtung 30 kann ferner in den Figuren nicht wiedergegebene Schalt- oder Bedienelemente aufweisen, über die ein Bediener der Werkzeugvorrichtung verschiedene Schaltzustände der Schalteinrichtung 30 auslösen kann.

Über die Blockiereinrichtungen 31, 32 kann entweder eine der Wellen 33, 34 oder beide Wellen 33, 34 gleichzeitig blockiert werden. Wird die Blockiereinrichtung 31 der Schalteinrichtung 30 über einen durch einen Bediener ausgelösten Schaltbefehl in eine blockierende Stellung überführt, dann ist die Welle 33 bewegungsstarr gesetzt. Hierdurch wird ebenfalls der Antriebsstrang 17 blockiert, der die Welle 33 kämmt. Das Planetenträgerrad 26, welches wiederum den Antriebsstrang 17 kämmt ist ebenfalls blockiert. Eine Drehbewegung des Abtriebs 29 des Motors 21 wird somit über die Planetenräder 24 und das nicht blockierte Hohlrad 25 nur auf den nicht blockierten Antriebsstrang 18 geleitet. Die Werkzeugvorrichtung 10 kann in dieser Stellung der Schalteinrichtung 30 auf der Führungsschiene 40 bewegt werden, wobei die Bewegungsrichtung von der Drehrichtung des Abtriebs 29 des Motors 21 abhängig ist.

Wird die Blockiereinrichtung 32 der Schalteinrichtung 30 über einen durch einen Bediener ausgelösten Schaltbefehl in eine blockierende Stellung überführt, dann ist die Welle 34 bewegungsstarr gesetzt. Hierdurch wird ebenfalls der Antriebsstrang 18 blockiert, der die Welle 34 kämmt. Das Hohlrad 25, welches wiederum den Antriebsstrang 18 kämmt ist ebenfalls blockiert. Eine Drehbewegung des Abtriebs 29 des Motors 21 wird somit über die Planetenräder 24 und das nicht blockierte Planetenträgerrad 26 nur auf den nicht blockierten Antriebsstrang 17 geleitet. Der Schwenkarm 13 kann in dieser Stellung der Schalteinrichtung 30 verstellt werden, wobei die Schwenkrichtung von der Drehrichtung des Abtriebs 29 des Motors 21 abhängig ist.

Vorzugsweise sind im stromlosen, nicht geschalteten Zustand der Schalteinrichtung 30 beide Blockiereinrichtungen 31, 32 bzw. beide Magnetkupplungen blockadewirksam gesetzt. Hierdurch ist eine Selbsthemmung für beide Antriebsstränge 17, 18 sichergestellt, die ein unbeabsichtigtes Verfahren der Werkzeugvorrichtung 10 verhindert. Die als Elektro-Magnetkupplungen ausgebildeten Blockiereinrichtungen 31, 32 haben ferner ein maximales Grenz-Blockiermoment, wodurch ein bestimmter Überlastschutz gewährleistet wird.

## Patentansprüche

1. Werkzeugvorrichtung, insbesondere Sägegerät, mit einem Führungsschlitten (12) zur Führung an einer Führungsschiene (40), mit einer Antriebsanordnung (20) zum Bewegen des Führungsschlittens (12) an der Führungsschiene (40) über einen ersten Antriebsstrang (17) und zum Verstellen eines Schwenkarms (13) über einen zweiten Antriebsstrang (18), wobei an dem Schwenkarm (13) ein Werkzeug (14), wie ein Sägewerkzeug, angeordnet ist, welches über eine separate Antriebseinheit (15) antreibbar ist,
**dadurch gekennzeichnet,**
**dass** die Antriebsanordnung (20) einen Motor (21) aufweist, der abtriebsseitig mit dem ersten Antriebsstrang (17) und mit dem zweiten Antriebsstrang (18) gekoppelt ist, und dass eine Schalteinrichtung (30) vorgesehen ist, über die die Antriebsstränge (17, 18) selektiv aktivierbar sind.

2. Werkzeugvorrichtung, nach Anspruch 1, **dadurch gekennzeichnet, dass** die Antriebsanordnung (20) eine Getriebeeinrichtung (22) aufweist, die eingangsseitig mit dem Motor (21) verbunden ist und die an einem ersten Getriebeabtrieb (27) mit dem ersten Antriebsstrang (17) gekoppelt ist und die an einem zweiten Getriebeabtrieb (27) mit dem zweiten Antriebsstrang (28) gekoppelt ist.

3. Werkzeugvorrichtung, nach Anspruch 2, **dadurch gekennzeichnet, dass** die Getriebeeinrichtung (22) als Planetengetriebe (23) ausgebildet ist, welches eingangsseitig mit Planetenrädern (24) den Abtrieb (29) des Motors (21) kämmt, und bei dem der erste Getriebeabtrieb (27) einen Planetenradträger (26) umfasst, an dem die Planetenräder (24) gelagert sind und der mit dem ersten Antriebsstrang (27) gekoppelt ist, und bei dem der zweite Getriebeabtrieb (28) ein Hohlrad (25) umfasst, das eingangsseitig die Planetenräder (24) kämmt und dass abtriebsseitig mit dem zweiten Antriebsstrang (28) gekoppelt ist.

4. Werkzeugvorrichtung, nach einem der Ansprüche 1 bis 3, **dadurch gekennzeichnet, dass** die Schalteinrichtung (30) wenigstens eine Blockiereinrichtung (31, 32) für den ersten oder zweiten Antriebsstrang (27, 28) aufweist, wobei die Blockiereinrichtung (31, 32) zwischen einer den Antriebsstrang (27, 28) blockierenden Stellung und einer den Antriebsstrang (27, 28) freigebenden Stellung schaltbar ist.

5. Werkzeugvorrichtung, nach Anspruch 4, **dadurch gekennzeichnet, dass** die Blockiereinrichtung (31, 32) elektromagnetisch arbeitet.

6. Werkzeugvorrichtung, nach Anspruch 4 oder 5, **dadurch gekennzeichnet, dass** die Schalteinrichtung (30) jeweils eine Blockiereinrichtung (31, 32) für jeden Antriebsstrang (27, 28) aufweist.

7. Werkzeugvorrichtung, nach einem der Ansprüche 4 bis 6, **dadurch gekennzeichnet, dass** die Blockiereinrichtung (31, 32) als Elektro-Magnetkupplung ausgebildet ist.

## Claims

1. Tool mechanism, in particular saw, comprising a guide carriage (12) for guidance on a guide rail (40), a drive arrangement (20) for moving the guide carriage (12) on the guide rail (40) via a first drivetrain (17) and for displacing a swivel arm (13) via a second drivetrain (18), a tool (14), such as a saw tool, which is driveable via a separate drive unit (15) being arranged on the swivel arm (13), **characterised in that** the drive arrangement (20) includes a motor (21) which is coupled on the output side to the first drivetrain (17) and to the second drivetrain (18), and **in that** a switching arrangement (30) is provided by means of which the drivetrains (17, 18) can be activated selectively.

2. Tool mechanism according to claim 1, **characterised in that** the drive arrangement (20) includes a gearbox arrangement (22) which is connected on the input side to the motor (21) and which is coupled by a first gearbox output (27) to the first drivetrain (17) and by a second gearbox output (27) to the second drivetrain (28).

3. Tool mechanism according to claim 2, **characterised in that** the gearbox arrangement (22) is in the form of a planetary gearbox (23) which meshes on the input side via planet wheels (24) with the output (29) of the motor (21), and in which the first gearbox output (27) includes a planet wheel carrier (26) on which the planet wheels (24) are mounted and which is coupled to the first drivetrain (27), and in which the second gearbox output (28) includes a ring gear (25) which meshes on the input side with the planet wheels (24) and is coupled on the output side to the second drivetrain (28).

4. Tool mechanism according to any one of claims 1 to 3, **characterised in that** the switching arrangement (30) includes at least one blocking device (31, 32) for the first or second drivetrain (27, 28), the blocking device (31, 32) being switchable between a position blocking the drivetrain (27, 28) and a position releasing the drivetrain (27, 28).

5. Tool mechanism according to claim 4, **characterised in that** the blocking arrangement (31, 32) operates electromagnetically.

6. Tool mechanism according to claim 4 or 5, **characterised in that** the switching arrangement (30) includes a respective blocking device (31, 32) for each drivetrain (27, 28).

7. Tool mechanism according to any one of claims 4 to 6, **characterised in that** the blocking device (31, 32) is in the form of an electromagnetic coupling.

## Revendications

1. Dispositif d'outillage, en particulier outil de sciage, comprenant un chariot de guidage (12) pour le guidage sur un rail de guidage (40) et un agencement d'entraînement (20) pour mouvoir le chariot de guidage (12) sur le rail de guidage (40) par l'intermédiaire d'une première chaîne de transmission (17) et pour déplacer un bras pivotant (13) par l'intermédiaire d'une seconde chaîne de transmission (18), un outil (14), comme un outil de sciage, apte à être entraîné par l'intermédiaire d'une unité d'entraînement séparée (15), étant disposé sur le bras pivotant (13), **caractérisé en ce que** l'agencement d'entraînement (20) comporte un moteur (21) qui est couplé, côté mené, à la première chaîne de transmission (17) et à la seconde chaîne de transmission (18), et **en ce qu'**il est prévu un dispositif de commutation (30) permettant d'activer sélectivement les chaînes de transmission (17, 18).

2. Dispositif d'outillage selon la revendication 1, **caractérisé en ce que** l'agencement d'entraînement (20) comporte un mécanisme (22) qui est relié côté entrée au moteur (21) et qui est couplé, au niveau d'une première sortie de transmission (27), à la première chaîne de transmission (17) et, au niveau d'une seconde sortie de transmission (27), à la seconde chaîne de transmission (28).

3. Dispositif d'outillage selon la revendication 2, **caractérisé en ce que** le mécanisme (22) est conformé en engrenage planétaire (23) qui s'engrène, côté entrée, avec la sortie (29) du moteur (21) par l'intermédiaire de pignons planétaires (24), dans lequel la première sortie de transmission (27) comprend un porte-planétaires (26) sur lequel sont montés les pignons planétaires (24) et qui est couplé à la première chaîne de transmission (27), et dans lequel la seconde sortie de transmission (28) comprend une roue creuse (25) qui, côté entrée, s'engrène avec les pignons planétaires (24) et qui, côté mené, est couplée à la seconde chaîne de transmission (28).

4. Dispositif d'outillage selon une des revendications 1 à 3, **caractérisé en ce que** le dispositif de commutation (30) comporte au moins un dispositif de blocage (31, 32) pour la première ou la seconde chaîne de transmission (27, 28), le dispositif de blocage (31, 32) étant commutable entre une position bloquant la chaîne de transmission (27, 28) et une position libérant la chaîne de transmission (27, 28).

5. Dispositif d'outillage selon la revendication 4, **caractérisé en ce que** le dispositif de blocage (31, 32) fonctionne de manière électromagnétique.

6. Dispositif d'outillage selon la revendication 4 ou 5, **caractérisé en ce que** le dispositif de commutation (30) comporte un dispositif de blocage (31, 32) pour chaque chaîne de transmission (27, 28).

7. Dispositif d'outillage selon une des revendications 4 à 6, **caractérisé en ce que** le dispositif de blocage (31, 32) est conformé en embrayage électromagnétique.
